# EUROPÄISCHE PATENTSCHRIFT

(11) **EP 0 613 224 B1**
(45) Veröffentlichungstag und Bekanntmachung des Hinweises auf die Patenterteilung: **18.09.1996**
(21) Anmeldenummer: 94100761.9
(22) Anmeldetag: 20.01.1994
(51) Int. Cl.: H02G 3/12, H02G 3/14

(54) **Elektrikschutzvorrichtung**
Electrical safety device
Dispositif électrique de sécurité

(30) Priorität: 22.02.1993 DE 9302515 U; 24.12.1993 EP 93120868
(43) Veröffentlichungstag der Anmeldung: 31.08.1994
(73) Patentinhaber: Popp & Co. GmbH, D-95460 Bad Berneck (DE)
(72) Erfinder: Haberstumpf, Ralf, D-95482 Gefrees (DE); Schmid, Peter, D-95460 Bad Berneck (DE)
(74) Vertreter: Tergau, Enno, Dipl.-Ing.

(56) Entgegenhaltungen:
- EP-A- 0 457 936
- DE-A- 1 465 268
- DE-A- 3 709 239

## Beschreibung

Die Erfindung betrifft eine Elektrikschutzvorrichtung nach dem Oberbegriff des Anspruchs 1.

Insbesondere betrifft die Erfindung Elektrikschutzvorrichtungen, wie z. B. Überspannungsschutzgeräte, für den Einbau in Kabelkanäle.

Besonders im Büro- und Industriebereich werden zunehmend empfindliche elektrische Geräte verwendet, wie Computer, Anrufbeantworter usw. Die Empfindlichkeit derartiger Geräte bezieht sich insbesondere auf Überspannungseinflüsse. Der Bedarf an beispielsweise Überspannungsschutzgeräten nimmt daher immer mehr zu.

Es ist bekannt, solche Elektrikschutzvorrichtungen, wie z. B. Überspannungsschutzgeräte, einfach an die Rückseite von Einbausteckdosen anzuflanschen. Dann ist der Überspannungsschutz aber nur für die jeweilige Steckdose wirksam. Eine derartige Anordnung ist aus der DE 37 09 239 A1 bekannt. Diese Elektrikschutzvorrichtung hat eine Schutz-Funktionseinheit, die eine Oberseite und außerhalb dieser liegende Eingangs- und Ausgangsanschlüsse für eine Elektrikleistung aufweist. Dabei sind Schutz-Funktionseinheiten für verschiedenartige Elektrikgeräte mit unterschiedlichen Elektrikleistungsanforderungen verwendbar. Eine Mehrzahl von Elektrikgeräten mit gleichen Elektrikleistungsanforderungen sind durch eine solche Schutz-Funktionseinheit nur schützbar, wenn an die Steckdose, an die die Elektrikschutzvorrichtung direkt montiert wird, eine Mehrfachsteckdoseneinheit angeschlossen wird.

Aus dem Firmenprospekt "Überspannungsschutz", UE'91 der Firma DEHN, gültig ab 1. Februar 1991, Seiten 28 und 72, sind eine Mehrzahl von verschiedenartigen Steckdosen mit integriertem Überspannungsschutzschaltungen bekannt. Weitere derartige Steckdosen sind in dem Firmenprospekt "Überspannungsschutz TRABTECH TRansient-ABsorption-TECHnologie" der Firma Phoenix Elektrizitätsgesellschaft, Juli 1988, Seiten 13 und 42, bekannt.

In Büro- und Industrieräumen ist immer mehr die Verlegung von Elektroinstallation in Kabelkanälen üblich. Die Verlegung ist einfach und sie läßt ohne großen baulichen Aufwand auch nachträgliche Ergänzungen und Veränderungen zu. Wenn in diesem Zusammenhang von der Industrie- und der Büroanwendung und deswegen von der Benutzung von Kabelkanälen die Rede ist, bedeutet dies aber für den Erfindungsgegenstand keine Einschränkung. Es läßt sich in gleicher Weise die Erfindung auch im Unterputz- oder im Aufputzbereich anwenden, wenngleich dort die Bedarfshäufigkeit weniger groß sein wird.

Gerade auf dem Gebiet der Elektroinstallation spielt das Design eine besondere Rolle. Jeder Hersteller bietet weitgehend ein eigenes Komplettprogramm an und dieses Komplettprogramm hat jeweils ein "eigenes Gesicht". Dabei werden große Bemühungen aufgewendet, dieses eigene Gesicht durchgehend für sämtliche Arten von Installationsgeräten zu wahren und zu verhindern, daß ein Mitbewerber seine Funktionsteile "passend" zu Rahmen- oder Zentralplatten, also passend zu den Sichtteilen eines eingeführten Installationsprogrammes eines anderen Herstellers liefern kann. Diese allein von kaufmännischen Gesichtspunkten geprägte übliche Vorgehensweise behindert die Einführung technischer Innovationen, wenn diese am Markt nur mit dem üblichen, rechtlich geschützten Design-Gesicht des jeweiligen Herstellers verkäuflich sind. Hierbei ist von Bedeutung, daß gerade die Elektroinstallationsindustrie mittelständisch strukturiert ist, wo sich viele mittelständische Hersteller den Markt teilen müssen.

Aus der US 3,909,502 Ist ein Kanalsystem zum Verlegen von Kabeln bekannt, bei dem speziell ausgebildete Funktionseinheiten verwendet werden müssen.

Für Installationsbetriebe ist es daher in nachteiliger Weise erforderlich, daß sie ein große Anzahl verschiedener Systeme bevorraten, um entsprechend den Anforderungen bei ihren Kunden die erforderlichen Installationen vornehmen zu können, Ist ein bestimmtes System einmal vom Markt genommen worden, können Ersatzteile und Erweiterungen nicht mehr beschafft werden und es ist ein weitgehender Austausch von eigentlich voll funktionsfähigen Teilen erforderlich, um die eigentliche Reparatur oder Erweiterung vornehmen zu können.

Der Erfindung liegt die Aufgabe zugrunde, eine Elektrikschutzvorrichtung der eingangs genannten Art so auszubilden, daß es einerseits den technischen Bedürfnissen voll entspricht und andrerseits universell einsetzbar ist.

Diese Aufgabe wird durch eine Elektrikschutzvorrichtung gemäß Anspruch 1 gelöst.

Ausgehend von einer gattungsgemäßen Elektrikschutzvorrichtung ist nach der Erfindung vorgesehen, daß an der Oberseite der Schutz-Funktionseinheit eine Montageplatte angeordnet ist, und daß Befestigungseinrichtungen vorgesehen sind, mittels denen wenigstens eine Zentralplatte einer Telefondosenabdeckung an der Montageplatte anbringbar ist.

Die technische Anwendbarkeit der erfindungsgemäßen Elektrikschutzvorrichtung wird nicht durch die erläuterte "Design-Sperre" anderer Hersteller behindert. In einem Installationsbetrieb müssen nicht mehr eine Große Anzahl von Systemen unterschiedlicher Hersteller bevorratet werden und auch eingestellte Systeme können auf einfache Weise noch nachträglich mit einer Elektrikschutzvorrichtung ausgestattet werden.

Die Lösung besteht darin, daß das Funktionsteil oder die Funktionsteile der Elektrikschutzvorrichtung, wie z. B. eines Überspannungsschutzgerätes, mit einer Montageplatte versehen sind, deren Befestigungseinrichtungen oder - elemente für die Befestigung mindestens einer Zentralplatte einer Telefondosenabdeckung geeignet sind. Mit anderen Worten besteht die Erfindung darin, daß dieses neue Funktionsteil "Elektrikschutzvorrichtung" mittels an sich artfremder, nämlich für eine Telefonanschlußdose bestimmter Abdeckungen, sowie weiter ggf. Rahmenplatten usw. verbaubar ausgestaltet wird.

Übliche Programme von Elektroinstallationsgeräten enthalten in der Regel auch Designlösungen für die Abdeckung von Telefonanschlüssen. Praktisch kein Wohn- oder Arbeitsraum ist heute ohne Telefonanschluß. Allein diese Telefonanschlußabdeckungen sind aber technisch so ausgestaltet, daß sie bei sämtlichen Abdeckungsherstellern dieselben, von den Herstellern der einheitlichen Telefondosen vorgegebenen Schraubanschlußpunkte sowohl hinsichtlich Positionierung der Schraublöcher als auch hinsichtlich deren Abmessungen aufweisen. Daher kann auf ganz einfache Weise eine Elektrikschutzvorrichtung installiert werden, wobei Systemvoraussetzungen nicht hinderlich sind und zusätzlich aus allen vorhandenen Systemen beliebig ausgewählt werden kann, um eine zusätzlich nachträglich installierte Elektrikschutzvorrichtung passend zum übrigen Design abzudecken.

Die Erfindung hat ferner den Vorteil, daß keine neuen Abdeckungen entwickelt und produziert werden müssen, und daß die erfindungsgemäß verwendbaren Zentralabdeckungen von Telefondosen auf Grund ihrer großen Produktionsstückzahlen äußerst günstig sind. Dadurch werden weiter Kosten gespart.

Ein weiterer Vorteil der Erfindung liegt darin, daß die Zentralplatten von Telefondosenabdeckungen bereits nach den einzelnen nationalen Bestimmungen hinsichtlich der an sie gestellten Sicherheitsanforderungen, wie z. B. Durchschlagsfestigkeit, Eigenbrennverhalten, Splitterverhalten usw. geprüft sind. Somit können durch die vorliegende Erfindung aufwendige Prüfungen, wie sie für neu entwickelte Teile erforderlich sind, entfallen.

Obwohl es grundsätzlich nicht auszuschließen ist, daß eine erfindungsgemäße Elektrikschutzvorrichtung zusätzlich auch gleich noch mit einer eigenen Anschlußsteckdose versehen ist, um gleich an der Elektrikschutzvorrichtung noch ein Gerät darüber anschließen zu können, so ist es nach Anspruch 2 bevorzugt, daß die Schutz-Funktionseinheit frei von Anschlußbuchsen für Elektrikgeräte ist. Dadurch bleibt der für die Elektrikschutzvorrichtung benötigt Raum minimiert und bei der Plazierung der Elektrikschutzvorrichtung braucht keine Rücksicht darauf genommen zu werden, daß dort auch ein Gerät direkt anschließbar sein sollte.

Gemäß Anspruch 3 ist bevorzugt, daß die Schutz-Funktionseinheit Überspannungsschutzeinrichtungen und/oder Netzfiltereinrichtungen enthält, die insbesondere als Module ausgebildet sind. Dies ermöglicht in vorteilhafter Weise ein optimale Anpassung an die Erfordernisse oder Kundenwünsche. Vorzugsweise sind weiterhin die Module direkt und/oder mittels Verbindungskabeln miteinander verbindbar. Dadurch wird der Vorteil erreicht, daß der erforderliche oder gewünschte Schutz ganz einfach durch Auswahl oder Austausch sowie hinzufügen entsprechender Module installiert werden kann. Dabei sind bevorzugte Ausführungen nach Anspruch 4 so, daß die Überspannungsschutzeinrichtungen eine Elektronik enthalten, die insbesondere eine Schutzschaltung, vorzugsweise mit zwei Varistoren und einem Überspannungsableiter, und eine Überwachungsschaltung, insbesondere mit wenigstens einer optischen Anzeigeeinrichtung, vorzugsweise einer Defektanzeige, aufweist und/oder die Netzfiltereinrichtungen einen Netzfilter enthalten, und daß insbesondere zumindest eine auswechselbare Überlastsicherung vorgesehen ist. Damit können besonders einfache und effektive Elektrikschutzvorrichtungen erhalten werden.

Durch entsprechende Kombination der vorbeschriebenen Merkmale ergeben sich weitere Vorteile.

Auf dem Markt sind Überspannungsschutzeinrichtungen oder -geräte, die als Einzelgeräte oder als kombiniertes Bauteil mit einer UP-Steckdose in Kanalsysteme eingebaut werden können. Diese Geräte bieten nur einen Schutz gegen Überspannungen, nicht gegen Störspannungen. Ferner wird nur der direkt angeschlossene bzw. angesteckte Verbraucher geschützt.

Ferner sind kombinierte Geräte mit Überspannungsschutz und Netzfilter nur als ortsveränderliche oder mobile Geräte im Angebot. Hier stören herumliegende Kabel, die nicht nur eine Unfallgefahr darstellen, sondern auch die Übersichtlichkeit und Ordnung behindem, was insbesondere bei Reparaturen oder Änderungen sowie Neuanschlüssen zu unnötigem Zeitaufwand führt.

Der Sinn der derartigen neuen Elektrikschutzvorrichtung mit Überspannungsschutzeinrichtungen mit eingebauten Netzfiltereinrichtungen ist es, speziell in Elektroinstallationskanalsystemen, wie sie in Bürogebäuden oder Energiesäulen Anwendung finden, komplette Räume bzw. Sektoren vor Überspannungen und Störspannungen zu schützen. D. h., wird am Anfang eines Kanals oder einer Energiesäule beispielsweise das Überspannungsschutzgerät mit eingebautem Netzfilter installiert, sind auch die nachfolgend angeschlossenen Steckdosen vor Überspannungen und Störspannungen geschützt.

Das Gerät schützt die angeschlossenen Verbraucher, wie empfindliche elektronische Geräte, vor Netzüberspannungen, die z. B. durch Schaltvorgänge oder Gewitter verursacht werden, und hochfrequenten Störspannungen, die z. B. durch Thyristorschalter, z. B. Dimmer, oder Schaltnetzteile verursacht werden. Die Elektronik besteht beispielsweise aus einer Schutzschaltung mit zwei Varistoren und einem Überspannungsableiter sowie einer Überwachungsschaltung mit einer optischen Anzeige , die z. B. eine Defektanzeige sein kann, und einem Netzfilter.

Somit ist die Unfallgefahr durch herumliegende Kabel behoben, die Schaltungen sind einfach zu verfolgen, so daß bei Arbeiten daran keine zusätzlichen Zeiten für das Entwirren der Schaltungen erforderlich sind und gleichzeitig werden alle im Anschluß an die Elektrikschutzvorrichtung angeschlossenen Steckdosen und Geräte wirksam gegen Überspannungen und Störspannungen geschützt.

Am Markt gibt es zwei übliche Telefonanschlüsse. Es ist dies zunächst die sogenannte TAE-Abdeckung, in die der Telefonanschluß eingestöpselt werden kann. Eine TAE-Abdeckung enthält eine Öffnung für das Durchstecken des Steckers. Diese Öffnung ist rechteckig. Sie läßt sich durch vorgeformte Ausbrechteile auf eine bis zu dreifache Durchtrittsgröße vergrößern, so daß maximal drei Telefonstecker nebeneinander durchführbar wären. Eine solche TAE-Abdeckung wird nun erfindungsgemäß für die Abdeckung des Überspannungsschutzgerätes benutzt, wobei die Durchtrittsöffnung als Sichtfenster für eine bevorzugt mit dem Funktionsteil verbundene Anzeigeeinheit verwendet wird. Daher ist nach Anspruch 5 vorgesehen, daß die Zentralplatte eine TAE-Abdeckung ist, in der eine Öffnung vorgesehen ist, daß die Schutz-Funktionseinheit eine an ihrer Oberseite entsprechend der Öffnung in der Zentralplatte angeordnete Anzeigeeinheit enthält, und daß die Anzeigeeinheit vorzugsweise optische Anzeigeeinrichtungen für den Funktions- und/oder Betriebszustand der Schutz-Funktionseinheit oder Teilen davon enthält. Hier wird also die bauliche Ausgestaltung der TAE-Zentralplatten weiter ausgenutzt, um die Anzeigeeinheit insbesondere sichtbar zu erhalten. Grundsätzlich ist auch eine akustische Anzeigeeinheit möglich, deren Wirkung jedoch auch dann optimal ist, wenn sie entsprechend der erfindungsgemäßen Weiterbildung nicht verdeckt ist.

Bevorzugt ist in diesem Zusammenhang ferner nach Anspruch 6, daß die Anzeigeeinheit ein Anzeigefeld hat, dessen Abmessungen und Umriß zumindest im wesentlichen den Abmessungen und dem Umriß der in der TAE-Abdeckung vorgesehenen Öffnung entspricht, und daß vorzugsweise das Anzeigefeld die Öffnung bündig ausfüllt. Dadurch ergibt sich eine besonders sauber aussehende Elektrikschutzvorrichtung, wobei der durch die Öffnung ohnehin vorhandene Platz optimal genutzt wird.

Weiterhin ist es bekannt, ortsfeste Telefonanschlüsse herkömmlicher Art mit einer Blindabdeckung zu liefern, die ebenfalls bei sämtlichen Anschlußdosen in der gleichen Dimensionierung an der gleichen Stelle durch eine Schraubverbindung fixierbar ist. Im Zusammenhang mit Anspruch 7 bedeutet dies, daß die Zentralplatte eine Blindabdeckung ist, und daß vorzugsweise die Schutz-Funktionseinheit eine derartige Größe aufweist. daß sie mit zwei Zentralplatten abdeckbar ist, wobei bevorzugt eine Zentralplatte eine TAE-Abdeckung und die andere eine Blindabdeckung ist.

Eine Elektrikschutzvorrichtung, wie ein Überspannungsschutzgerät der erfindungsgemäßen Art kann ein bestimmtes Bauvolumen haben, welches über die Einbaugröße einer Einfach-Steckdose hinausgeht. Der Vorteil der vorstehenden Ausführung der Erfindung besteht nun darin, daß das über die mit dem Sichtfenster versehene TAE-Abdeckung seitlich hinausstehende Teil des Funktionsteiles oder ein davon abgetrenntes, gesondertes Funktionsteil, welches aber eine Zugänglichkeit von außen nicht benötigt, mit einer solchen Telefon-Blindabdeckung abdeckbar ist, die wiederum einem beliebigen Design-Programm entlehnt sein kann. D. h., daß ohne weitere Spezialteile auch größere Anordnungen von Elektrikschutzvorrichtungen ohne weiteres sauber und wunschgemäß abgedeckt werden können, und zwar ohne daß hierfür kostspielige Spezialteile zu fertigen, prüfen und bevorraten sind.

Am einfachsten wird die Montage der Zentralplatte durch die Ausgestaltung nach Anspruch 8. Danach weist/-en die Schutz-Funktionseinheit und/oder die Montageplatte eine Gewindebohrung, die Zentralplatte enthält zur Montage eine mit der Gewindebohrung ausgerichtete Haltebohrung, und eine Schraube ist durch die Haltebohrung hindurch in die Gewindebohrung einschraubbar. In an sich üblicher Weise bei derartigen Bauteilen ist der Schraubenkopf größer als der freie Durchmesser der Haltebohrung in der Zentralplatte, so daß die Zentralplatte beim Einschrauben der Schraube in die Gewindebohrung durch den Schraubenkopf gegen die Montageplatte drückbar ist. Ferner hat die Gewindebohrung eine entsprechende Schraub- und evtl. zusätzliche freie Länge, so daß die Schraube soweit einschraubbar ist, daß die Zentralplatte fest gegen die Montageplatte gedrückt ist. Damit eine Gefährdung der Umgebung und der Anordnung durch einen vorstehenden Schraubenkopf vermieden wird, hat die Haltebohrung vorzugsweise eine Senkausnehmung zur Aufnahme des Schraubenkopfes.

Es können beliebige Ausgestaltungen der Zentralplatten entsprechend lieferbaren Systemen verwendet werden, da die Passung durch die Telefonanschlußnormung gewährleistet ist. Insbesondere ist nach Anspruch 9 daher vorgesehen, daß eine die Zentralplatte umgebende Zwischenplatte und/oder eine Rahmenplatte vorgesehen sind/ist, und daß bevorzugt die Rahmenplatte ggf. über die Zwischenplatte durch die Zentralplatte gehalten ist, wenn letztere bezüglich der Montageplatte befestigt ist, und/oder daß vorzugsweise bei mehreren Zentralplatten ein gemeinsamer Mehrfachrahmen vorgesehen ist. Die damit beanspruchten Ausgestaltungen entsprechen gestalterischen Lösungen, wie sie derzeit auf dem Markt sind, so daß sich die entsprechend ausgeführten Elektrikschutzvorrichtungen gut in die bestehenden Systeme eingliedern lassen.

Nach Anspruch 10 ist vorgesehen, daß zum Einbau in Elektroinstallations- oder Brüstungskanalsysteme und/oder Energiesäulen und/oder in Unterputzinstallationsdosen, insbesondere ggf. Einbau-Gerätedoppeldosen für eine größere Schutz-Funktionseinheit, geeignete Befestigungseinrichtungen oder zum Anbringen oberhalb von Oberflächen ein Gehäuse mit geeigneten Befestigungseinrichtungen vorgesehen sind/ist. Dadurch ist die jeweils erforderliche und/oder gewünschte Installation in optimaler Weise ohne Probleme möglich.

Die Aufgabe der Erfindung wird ferner nach Anspruch 11 dadurch gelöst, daß eine Zentralplatte einer Telefondosenabdeckung bei einer erfindungsgemäßen Elektrikschutzvorrichtung verwendet wird. Dabei ergeben sich im einzelnen wiederum die vorstehenden Vorteile, wenn die entsprechenden Ausgestaltungen der Elektrikschutzvorrichtungen zu Grunde gelegt werden.

Durch entsprechende Merkmalskombinationen im Rahmen der Ansprüche ergeben sich allgemein folgende Vorteile:
- Der Einbau der Elektrikschutzvorrichtungen erfolgt in handelsübliche Einbau-Gerätedoppeldosen für Elektroinstallationskanäle.
- Es können ganze Räume oder Energiesäulen (Inseln) mit einer Elektrikschutzvorrichtung geschützt werden.
- Der Betriebszustand der Elektrikschutzvorrichtung kann durch eine optische Anzeige deutlich gemacht werden, wie z. B. grün: Überspannungsschutz in Betrieb; und rot: Überspannungsschutz außer Funktion.
- Eine auswechselbare Sicherung schützt die Elektrikschutzvorrichtung vor einer Überlastung.
- Die Elektrikschutzvorrichtung ist universell kombinierbar mit Schalterprogrammen verschiedener Hersteller.

Darüber hinaus ist es vorteilhaft, solche Elektrikschutzvorrichtungen, wie Überspannungsschutzgeräte mit einem eingebauten Netzfilter zu kombinieren. Der Netzfilter dient zum Ausfiltern hochfrequenter Störimpulse (Funkentstörung) zum Schutz der angeschlossenen Stromverbraucher.

Weitere vorteilhafte Ausgestaltungen der Erfindung ergeben sich aus einzelnen Kombinationen der Ansprüche.

Der Gegenstand der Erfindung wird nachfolgend anhand der Zeichnung beispielsweise erläutert; in dieser zeigen:
- Fig. 1: eine Seitenansicht einer ersten Ausführungsform einer Elektrikschutzvorrichtung vor der Montage einer Abdeckung;
- Fig. 2: eine Draufsicht auf eine Montageplatte einer zweiten Ausführungsform der Elektrikschutzvorrichtung;
- Fig. 3: eine Draufsicht auf die erste Ausführungsform der Elektrikschutzvorrichtung, wobei nur die Montageplatte und teilweise die Schutz-Funktionseinheit gezeigt sind; und

In allen Figuren der Zeichnung sind gleiche Teile mit gleichen Bezugszeichen versehen, so daß sich ihre Anordnungen und Zusammenhänge ohne weiteres auch aus den Darstellungen ergeben, auch wenn die entsprechenden Bestandteile zur Vermeidung von Wiederholungen nicht bei der Beschreibung jeder einzelnen Figur gesondert wieder angegeben sind.

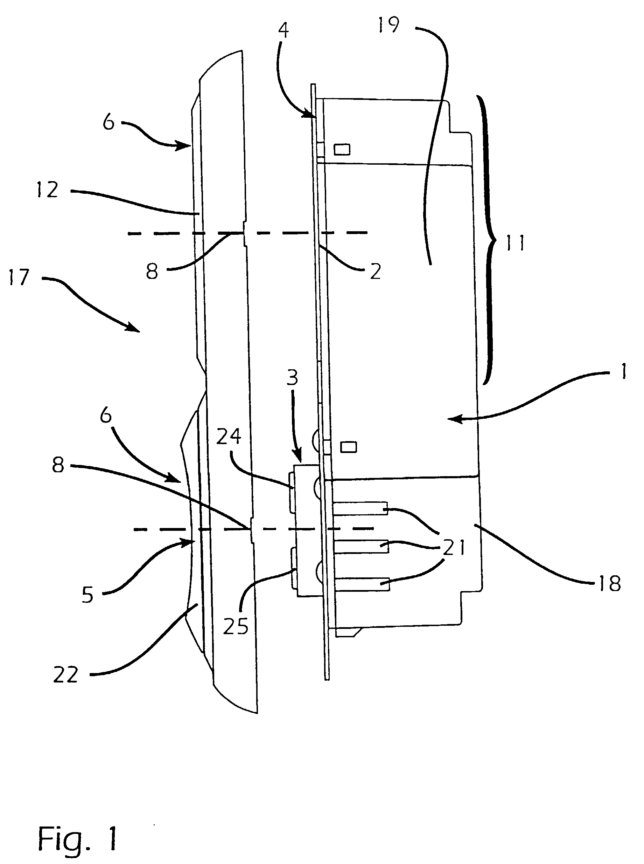

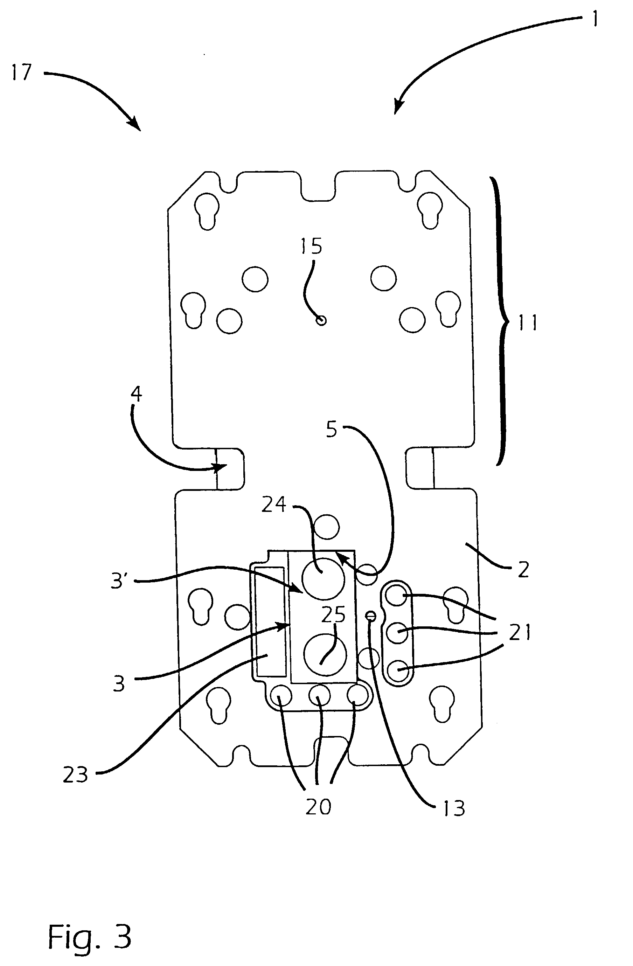

Figur 1 zeigt die Seitenansicht einer Elektrikschutzvorrichtung 17 mit Überspannungsschutzeinrichtungen 18 mit eingebauten Netzfiltereinrichtungen 19, wobei der technische Aufbau dieser Bestandteile an sich für die übrige Ausgestaltung der Elektrikschutzvorrichtung 17 nicht in erster Linie relevant ist. Daher wird nachstehend der Einfachheit halber zunächst von der Elektrikschutzvorrichtung 18 oder der Schutz-Funktionseinheit 1 gesprochen. Die Schutz-Funktionseinheit 1 ist auf ihrer Oberseite 4 von einer Montageplatte 2 abgedeckt. Über die Montageplatte 2, die in der Draufsicht in Figur 3 dargestellt ist, steht die Anzeigeeinheit 3 bzw. deren Anzeigefeld 3' zur Oberseite 4 hinaus. Das Anzeigefeld 3' hat einen rechteckigen Umriß, dessen Abmessungen den Abmessungen des Ausschnittes oder der Öffnung 5 in der Zentralplatte 6 einer TAE-Dose entspricht. Das Anzeigefeld 3' der des Funktionseinheit 1 füllt dabei bündig die Öffnung 5 in der Zentralplatte 6 aus.

Die Zentralplatte 6 ist mit der Schraube 14 an der Montageplatte 2 verschraubt. Sie könnte jedoch auch direkt mit der Schutz-Funktionseinheit 1 verschraubt sein. In Figur 1 ist die Schraubachse 8 der Schraube 14 dargestellt, die in die Gewindebohrung 15 der Montageplatte 2 einschraubbar ist, wie dies anhand der in Figur 3 dargestellten Gewindebohrung 15 zu erkennen ist.

Wesentlich ist also, daß die Montageplatte 2 oder die Schutz-Funktionseinheit 1 exakt dort eine Gewindebohrung 15 aufweist, wo eine solche für die Schraubfixierung der Zentralplatte 5 einer TAE-Abdeckung 22 benötigt wird.

Im Falle des Ausführungsbeispiels von Figur 1 und 3 ist das Funktionsteil oder die Schutz-Funktionseinheit 1 so voluminös, daß es bzw. sie seitlich über eine Einzelabdeckung hinaussteht. Der über den Bereich einer Einzelabdeckung hinausstehende Bereich 11 ist seinerseits durch eine Telefondosenabdeckung herkömmlicher Art abgedeckt, d. h. durch eine solche Telefondosenabdeckung, die eine Blindabdeckung 12 bildet. Dies ist praktisch eine Kaschierung. Von Bedeutung ist aber wiederum, daß die Montageplatte 2 der Schutz-Funktionseinheit 1 im Befestigungsbereich dieser üblichen Blindabdeckung 12 eine Gewindebohrung 15 für die Aufnahme der Schraube 14 zum Fixieren der Blindabdeckung enthält. Wenn hier von einer Blindabdeckung 12 gesprochen wurde, so kann es sich dabei aber in gleicher Weise um jedwede Art einer durchführungsfreien Abdeckung handeln, wie sie praktisch auch für Reserveausnehmungen usw. von den Installationsgeräteherstellern angeboten wird.

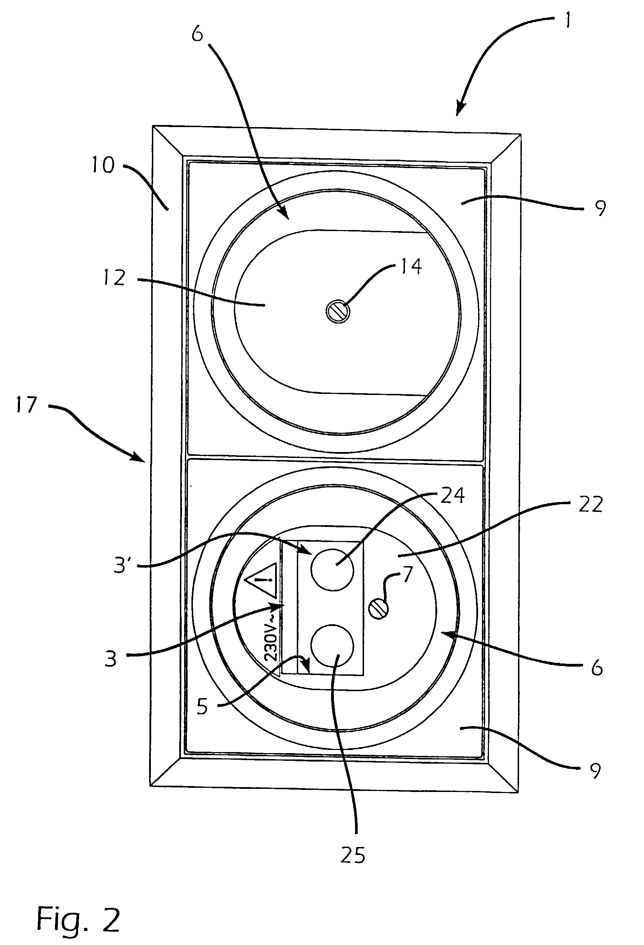

Die Schrauben 7 und 14 sind in Figur 2 gut zu erkennen, deren Ausführungsbeispiel insoweit mit der in den Figuren 1 und 3 gerzeigten Ausführung übereinstimmt.

Wenn vorstehend von einer herkömmlichen Telefonanschlußdose die Rede war, so ist damit eine Telefondose für ortsfesten Anschluß gemeint.

Beim Ausführungsbeispiel der Figuren 1 und 3 ist die voluminöse Bauform der Funktionseinheit 1 eine Folge der Kombination eines Überspannungsschutzgerätes mit einem Netzfilter der entsprechenden Einrichtungen 18 und 19. Man kann natürlich beide Teile auch zum Gegenstand gesonderter Schutz-Funktionseinheiten 1 machen, die dann entsprechend kleinervolumig sind und sich in einem Raum unterbringen lassen, der von einem Einfachrahmen nach außen abdeckbar ist.

In Figur 3 sind besonders gut in der Draufsicht die Eingangsanschlüsse 20 und die Ausgangsanschlüsse 21 zu erkennen, die auch in Figur 1 dargestellt sind. Dabei handelt es sich im gezeigten Beispiel um einfache Schraubklemmen bekannter Art, die durch die in Figur 3 gezeigten Öffnungen mittels eines Schraubenziehers betätigt werden können. Alternativ können auch Federklemmvorrichtungen u. a. verwendet werden. Die Verteilung der Eingangsanschlüsse 20 und der Ausgangsanschlüsse 21 kann auch in jeglicher anderen geeigneten Form erfolgen. Wesentlich dabei ist, daß sie allesamt unterhalb der Montageplatte 2 liegen, d. h. unterhalb der Oberseite 4 der Schutz-Funktionseinheit 1. Dadurch sind die Anschlüsse innerhalb eines Kabelkanals oder unterhalb einer Verputzung eines Mauerwerks zugänglich, wo die Elektrikschutzvorrichtung 17 eingesetzt wird. Letztere kann somit direkt in den Verlauf von Kabeln oder allgemein elektrischen Leitungen eingebaut werden.

Die Schutz-Funktionseinheit 1 ist frei von Anschlußbuchsen, wie z. B. Steckdosen für Elektrikgeräte. Der technische Aufbau einer Elektrikschutzvorrichtung 17 mit Überspannungsschutzeinrichtungen 18 mit eingebauten oder angebauten Netzfiltereinrichtungen 19 ist nachstehend beschrieben. Ein derartiges Überspannungsschutzgerät mit eingebautem Netzfilter kann z. B. in Elektroinstallations- bzw. Brüstungskanalsysteme und Energiesäulen eingebaut werden. Der Sinn der derartigen neuen Elektrikschutzvorrichtung mit Überspannungsschutzeinrichtungen mit eingebauten Netzfiltereinrichtungen ist es, speziell in Elektroinstallationskanalsystemen, wie sie in Bürogebäuden oder Energlesäulen Anwendung finden, komplette Räume bzw. Sektoren vor Überspannungen und Störspannungen zu schützen. D. h., wird am Anfang eines Kanals oder einer Energiesäule das Überspannungsschutzgerät mit eingebautem Netzfilter installiert, sind auch die nachfolgend angeschlossenen Steckdosen vor Überspannungen und Störspannungen geschützt. Die Vorrichtung oder das Gerät schützt die angeschlossenen Verbraucher, wie empfindliche elektronische Geräte, vor Netzüberspannungen, die z. B. durch Schaltvorgänge oder Gewitter verursacht werden, und hochfrequenten Störspannungen, die z. B. durch Thyristorschalter, z. B. Dimmer, oder Schaltnetzteile verursacht werden. Die Elektronik besteht beispielsweise aus einer Schutzschaltung mit zwei Varistoren und einem Überspannungsableiter sowie einer Überwachungsschaltung mit einer optischen Anzeige , die z. B. eine Defektanzeige sein kann, und einem Netzfilter.

Beim Ausführungsbeispiel gemäß Fig. 2 ist die Zentralplatte 6 von einer Zwischenplatte 9 umgeben, die ihrerseits in eine Ausnehmung einer Rahmenplatte 10 von außen eingesetzt ist. Es muß nicht notwendigerweise eine Zwischenplatte 9 vorhanden sein. Es gibt viele Fabrikate, bei denen die Zentralplatte 6 und die Zwischenplatte 9 eine Einheit bilden. Von Bedeutung ist nur, daß die Schraube 7 praktisch über die Zentralplatte 6 und gegebenenfalls über eine Zwischenplatte 9 auch die ortsfeste Fixierung der Rahmenplatte 10 auf einer Wand oder insbesondere auf dem Kabelkanal besorgt. Wie weiter zu erkennen ist, müssen die Orte für die Schrauben 7 und 14 für die TAE-Abdeckung 22 und die Blindabdeckung 12 nicht gleich sein. GGf. können universell mehrere Gewindebohrungen 13 und 15 vorgesehen sein.

In der Ausführungsform der Figuren 1 und 3 sind Kontrollampen 24 und 25 vorgesehen, die zu einer Anzeigeeinheit 3 gehören und in deren Anzeigefeld 3' angeordnet sind, und zwar so, daß die Anzeigeeinheit 3 durch die Öffnung 5 der TAE-Abdeckung 22 hindurchragt. Die Kontrollampe 24 ist eine grüne Leuchtdiode, die in Betrieb ist, wenn die Elektrikschutzvorrichtung 17 arbeitet oder funktioniert. Die Kontrollampe 25 ist eine rote Leuchtdiode, die leuchtet, wenn die Elektrikschutzvorrichtung 17 außer Betrieb ist. Statt der Leuchtdioden können auch andere optische Anzeigeeinrichtungen oder sogar akustische Anzeigeeinrichtungen vorgesehen sein, die ferner nicht zwingend eine Öffnung brauchen, um wahrgenommen zu werden, z. B., wenn das Material der Zentralplatte 6 wenigstens teilweise optisch transparent ist oder die Anordnung nicht schalldicht ist. Es können auch Anzeigen für andere Zustände und Funktionen vorgesehen werden. Gerade bei Verwendung einer TAE-Abdeckung 22 ist es möglich, im Bereich der Öffnung 5 an der Schutz-Funktionseinheit 1 bzw. deren Anzeigeeinheit 3 oder der Montageplatte 2 Informationen über Typ, Einsatz und/oder ähnliches anzugeben, da diese Informationen auch nach abgeschlossener Montage der Elektrikschutzvorrichtung 17 weiterhin gut sichtbar bleiben.

Die Konstellation der Schaltung ist bei allen möglichen Ausführungsformen ggf. entsprechend den Anforderungen der Elektrikleistung zu wählen, die im übrigen auch die konkrete Gestaltung der Elektrikschutzvorrichtung 17 und insbesondere der Überspannungsschutzeinrichtungen 18 und Netzfiltereinrichtungen 19, die zu verwenden sind, vorgibt. Dementsprechend können auch anders wirkende und aufgebaute Schutz-Funktionseinheiten 1 zum Einsatz kommen. Es sind die vielfältigsten Einsatzbereiche möglich, wie z. B. Telefonleitungen, verschiedenste Computerdatenleitungen, Leistungsleitungen für unterschiedliche Wechsel- und Gleichströme und auch für Starkströme, Steuerleitungen u. v. m. Die Elektrikschutzvorrichtung 17 kann ferner über geeignete Befestigungseinrichtungen und/oder ein Gehäuse verfügen, um die weitere Montage und den Betrieb zu vereinfachen und zu verbessern, wie in der Figur 3 beispielhaft durch Aussparungen und Löcher als Teile von Befestigungseinrichtungen in der Montageplatte 2 dargestellt ist.

Die vorstehenden Ausführungen der Erfindung wurden nur beispielhaft angegeben. Die gesamte Tragweite der Erfindung ist durch die Ansprüche bestimmt.

### Bezugszeichenliste

- 1: SchutzFunktionseinheit
- 2: Montageplatte
- 3: Anzeigeeinheit
- 3': Anzeigefeld
- 4: Oberseite
- 5: Öffnung
- 6: Zentralplatte
- 7: Schraube
- 8: Schraubachse
- 9: Zwischenplatte
- 10: Rahmenplatte
- 11: hinausstehender Bereich 11
- 12: Blindabdeckung
- 13: Gewindebohrung
- 14: Schraube
- 15: Gewindebohrung
- 17: Elektrikschutzvorrichtung
- 18: Überspannungsschutzeinrichtun gen
- 19: Netzfiltereinrichtungen
- 20: Eingangsanschlüsse
- 21: Ausgangsanschlüsse
- 22: TAE-Abdeckung
- 23: Aufnahmeraum
- 24: Kontrollampe
- 25: Kontrollampe

## Patentansprüche

1. Elektrikschutzvorrichtung mit einer Schutz-Funktionseinheit (1), die eine Oberseite (4) und außerhalb dieser liegende Eingangs- und Ausgangsanschlüsse (20,21) für eine Elektrikleistung aufweist,
wobei Schutz-Funktionseinheiten (1) für verschiedenartige Elektrikgeräte mit unterschiedlichen Elektrikleistungsanforderungen verwendbar sind,
dadurch gekennzeichnet,
daß an der Oberseite (4) der Schutz-Funktionseinheit (1) eine Montageplatte (2) angeordnet ist, und
daß Befestigungseinrichtungen (7, 13, 14, 15) vorgesehen sind, mittels denen wenigstens eine Zentralplatte (6) einer Telefondosenabdeckung (12, 22) an der Montageplatte (2) anbringbar ist.

2. Elektrikschutzvorrichtung nach Anspruch 1,
dadurch gekennzeichnet,
daß die Schutz-Funktionseinheit (1) frei von Anschlußbuchsen für Elektrikgeräte ist.

3. Elektrikschutzvorrichtung nach Anspruch 1 oder 2,
dadurch gekennzeichnet,
daß die Schutz-Funktionseinheit (1) Überspannungsschutzeinrichtungen (18) und/oder Netzfiltereinrichtungen (19) enthält, die insbesondere als Module ausgebildet sind, und
daß insbesondere die Module direkt und/oder mittels Verbindungskabeln miteinander verbindbar sind.

4. Elektrikschutzvorrichtung nach Anspruch 3,
dadurch gekennzeichnet,
daß die Überspannungsschutzeinrichtungen (18) eine Elektronik enthalten, die insbesondere eine Schutzschaltung, vorzugsweise mit zwei Varistoren und einem Überspannungsableiter, und eine Überwachungsschaltung, insbesondere mit wenigstens einer optischen Anzeigeeinrichtung, vorzugsweise einer Defektanzeige, aufweist und/oder die Netzfiltereinrichtungen (19) einen Netzfilter enthalten, und
daß insbesondere zumindest eine auswechselbare Überlastsicherung vorgesehen ist.

5. Elektrikschutzvorrichtung nach einem der vorhergehenden Ansprüche,
dadurch gekennzeichnet,
daß die Zentralplatte (6) eine TAE-Abdeckung (22) ist, in der eine Öffnung (5) vorgesehen ist,
daß die Schutz-Funktionseinheit (1) eine an ihrer Oberseite (4) entsprechend der Öffnung (5) in der Zentralplatte (6) angeordnete Anzeigeeinheit (3) enthält, und
daß die Anzeigeeinheit (3) vorzugsweise optische Anzeigeeinrichtungen für den Funktions- und/oder Betriebszustand der Schutz-Funktionseinheit (1) oder Teilen davon enthält.

6. Elektrikschutzvorrichtung nach Anspruch 5,
dadurch gekennzeichnet,
daß die Anzeigeeinheit (3) ein Anzeigefeld (3') hat, dessen Abmessungen und Umriß zumindest im wesentlichen den Abmessungen und dem Umriß der in der TAE-Abdeckung (22) vorgesehenen Öffnung (5) entspricht, und
daß vorzugsweise das Anzeigefeld (3') die Öffnung (5) bündig ausfüllt.

7. Elektrikschutzvorrichtung nach einem der vorhergehenden Ansprüche,
dadurch gekennzeichnet,
daß die Zentralplatte (6) eine Blindabdeckung (12) oder eine Telefonabdeckung für einen ortsfesten Telefonanschluß ist und ist und daß vorzugsweise die Schutz-Funktionseinheit (1) eine derartige Größe aufweist, daß sie mit zwei Zentralplatten (6) abdeckbar ist, wobei insbesondere eine Zentralplatte (6) eine TAE-Abdeckung (22) und die andere eine Blindabdeckung oder eine Telefonabdeckung für einen ortsfesten Telefonanschluß ist.

8. Elektrikschutzvorrichtung nach einem der vorhergehenden Ansprüche,
dadurch gekennzeichnet,
daß die Schutz-Funktionseinheit (1) und/oder die Montageplatte (2) zumindest eine Gewindebohrung (13, 15) aufweisen/-t,
daß die Zentralplatte (6) zur Montage eine mit der Gewindebohrung (13, 15) ausgerichtete Haltebohrung enthält, und
daß eine Schraube (7, 14) durch die Haltebohrung hindurch in die Gewindebohrung (13, 15) einschraubbar ist, wobei der Schraubenkopf größer als der freie Durchmesser der Haltebohrung in der Zentralplatte (6) ist, so daß die Zentralplatte (6) beim Einschrauben der Schraube (7, 14) in die Gewindebohrung (13, 15) durch den Schraubenkopf gegen die Montageplatte (2) drückbar ist, und wobei die Gewindebohrung (13, 15) eine entsprechende Schraub- und evtl. zusätzliche freie Länge hat, so daß die Schraube (7, 14) soweit einschraubbar ist, daß die Zentralplatte (6) fest gegen die Montageplatte (2) gedrückt ist, und
daß die Haltebohrung vorzugsweise eine Senkausnehmung zur Aufnahme des Schraubenkopfes enthält.

9. Elektrikschutzvorrichtung nach einem der vorhergehenden Ansprüche,
dadurch gekennzeichnet,
daß eine die Zentralplatte (6) umgebende Zwischenplatte (9) und/oder eine Rahmenplatte (10) vorgesehen sind/ist, und
daß bevorzugt die Rahmenplatte (10) ggf. über die Zwischenplatte (9) durch die Zentralplatte (6) gehalten ist, wenn letztere bezüglich der Montageplatte (2) befestigt ist, und/oder
daß vorzugsweise bei mehreren Zentralplatten (6) ein gemeinsamer Mehrfachrahmen vorgesehen ist.

10. Elektrikschutzvorrichtung nach einem der vorhergehenden Ansprüche,
dadurch gekennzeichnet,
daß zum Einbau in Elektroinstallations- oder Brüstungskanalsysteme und/oder Energiesäulen und/oder in Unterputzinstallationsdosen, insbesondere ggf. Einbau-Gerätedoppeldosen für eine größere Schutz-Funktionseinheit (1), geeignete Befestigungseinrichtungen oder zum Anbringen oberhalb von Oberflächen ein Gehäuse mit geeigneten Befestigungseinrichtungen vorgesehen sind/ist.

11. Verwendung einer Zentralplatte einer Telefondosenabdeckung (12, 22) bei einer Elektrikschutzvorrichtung (17) nach einem der vorhergehenden Ansprüche.

## Claims

1. An electrical safety device, with a protective operating unit (1), which has a top (4) and, disposed outside the latter, input and output connectors (20, 21) for an electrical output performance,
in which arrangement, protective operating units (1) can be used for various electrical appliances with different electrical output performance requirements,
characterized in that
a mounting plate (2) is arranged at the top (4) of the protective operating unit (1), and
that fastening devices (7, 13, 14, 15) are provided, by means of which at least one central plate (6) of a telephone socket cover (12, 22) can be attached to the mounting plate (2).

2. An electrical safety device according to claim 1,
characterized in that
the protective operating unit (1) does not have any connector sockets for electrical appliances.

3. An electrical safety device according to claim 1 or 2,
characterized in that
the protective operating unit (1) contains overvoltage safety devices (18) and/or mains filter devices (19) which are designed in particular as modules, and
that in particular the modules can be connected to one another directly and/or by means of connecting leads.

4. An electrical safety device according to claim 3,
characterized in that
the overvoltage safety devices (18) comprise an electronic unit which has in particular a safety circuit, preferably with two varistors and an overvoltage arrester, and a monitoring circuit, in particular with at least one optical display device, preferably a fault indicator, and/or the mains filter devices (19) contain a mains filter, and
that in particular at least one exchangeable overload fuse is provided.

5. An electrical safety device according to one of the preceding claims.
characterized in that
the central plate (6) is a TAE-cover (22), wherein an opening (5) is provided,
that the protective operating unit (1) comprises an indicator unit (3) arranged at its top, (4) corresponding to the opening (5) in the central plate (6), and
that the indicator unit (3) preferably contains optical devices for displaying the functional and/or operational state of the protective operating unit (1) or parts thereof.

6. An electrical safety device according to claim 5,
characterized in that
the indicator unit (3) has a display field (3') whose dimensions and contour correspond at least substantially to the dimensions and the contour of the opening (5) provided in the TAE-cover (22), and that the display field (3') preferably fills the opening (5) with a flush fit.

7. An electrical safety device according to one of the preceding claims.
characterized in that
the central plate (6) is a blind cover (12) or a telephone cover for a telephone connection fixed in position, and that preferably the protective operating unit (1) is of such a size that it can be covered by two central plates (6), in which arrangement in particular, one central plate (6) is a TAE-cover (22), and the other a blind cover or a telephone cover for a telephone connection fixed in position.

8. An electrical safety device according to one of the preceding claims,
characterized in that
the protective operating unit (1) and/or the mounting plate (2) have or has at least one tapped bore (13, 15),
that the central plate (6) has for assembly a holding bore aligned with the tapped bore (13, 15), and
that a screw (7, 14) can be screwed in through the holding bore into the tapped bore (13, 15), in which arrangement the screw head is larger than the free diameter of the holding bore in the central plate (6), so that the central plate (6) can be pressed by the screw head against the mounting plate (2) as the screw (7, 14) is being screwed in into the tapped bore (13,15), and in which arrangement the tapped bore (13, 15) has a corresponding screw length and an additional free length if required, so that the screw (7, 14) can be screwed in so far that the central plate (6) is pressed firmly against the mounting plate (2), and that the holding bore preferably has a countersunk recess for receiving the screw head.

9. An electrical safety device according to one of the preceding claims,
characterized in that
an intermediate plate (9) surrounding the central plate (6) and/ or a frame plate (10) is or are provided, and
that preferably the frame plate (10) is held by the central plate (6), if required via the intermediate plate (9), when the central plate has been secured relative to the mounting plate (2), and/or
that preferably a common multiple frame is provided in the case of several central plates (6).

10. An electrical safety device according to one of the preceding claims,
characterized in that
for the installation in electrical installation systems or parapet duct systems, and/or energy columns and/or in flush installation sockets, in particular installed double appliance sockets, if required for a larger protective operating unit (1), suitable fastening devices are provided, or a casing with suitable fastening devices is provided for attachment on top of surfaces.

11. Use of a central plate of a telephone socket cover (12, 22) in an electrical safety device (17) according to one of the preceding claims.

## Revendications

1. Dispositif de protection électrique comprenant une unité fonctionnelle de protection (1), qui présente un côté supérieur (4) et des raccordements d'entrée et de sortie (20, 21), se trouvant à l'extérieur de celui-ci, pour une puissance électrique,
des unités fonctionnelles de protection (1) pour des appareils électriques de type différent, comportant des exigences de puissance électrique différentes, étant susceptibles d'être employées,
caractérisé en ce,
qu'au côté supérieur (4) de l'unité fonctionnelle de protection (1), une plaque de montage (2) est agencée, et
que des agencements de fixation (7, 13, 14, 15) sont prévus, au moyen desquels, au moins une plaque centrale (6) d'un élément de recouvrement de prise femelle pour téléphone (12, 22) est susceptible d'être jointe à la plaque de montage (2).

2. Dispositif de protection électrique selon la revendication 1,
caractérisé en ce,
que l'unité fonctionnelle de protection (1) est libre de prises femelles de raccordement pour des appareils électriques.

3. Dispositif de protection électrique selon la revendication 1 ou la revendication 2,
caractérisé en ce,
que l'unité fonctionnelle de protection (1) contient des agencements de protection contre la surtension (18) et/ou des agencements de filtre de réseau (19), qui, en particulier, sont constitués comme des modules, et
qu'en particulier, les modules sont susceptibles d'être reliés, directement et/ou au moyen de câbles de liaison, les uns avec les autres.

4. Dispositif de protection électrique selon la revendication 3,
caractérisé en ce,
que les agencements de protection contre la surtension (18) contiennent un ensemble électronique, qui, en particulier, présente un circuit de protection, comprenant, de façon préférée, deux varistors et un dériveur de surtension, et un circuit de surveillance, en particulier comprenant au moins un agencement d'indication optique, de façon préférée une indication de défaut, et/ou les agencements de filtre de réseau (19) contiennent un filtre de réseau, et
qu'en particulier, au moins une sécurité contre la surcharge susceptible d'être échangée est prévue.

5. Dispositif de protection électrique selon une des précédentes revendications,
caractérisé en ce,
que la plaque centrale (6) est un élément de recouvrement de TAE (22), dans laquelle, une ouverture (5) est prévue,
que l'unité fonctionnelle de protection (1) contient une unité d'indication (3) agencée à son côté supérieur (4), correspondant à l'ouverture (5) dans la plaque centrale (6), et
que l'unité d'indication (3), de façon préférée, contient des agencements d'indication optique pour l'état de fonctionnement et/ou d'exploitation de l'unité fonctionnelle de protection (1) ou de parties de celle-ci.

6. Dispositif de protection électrique selon la revendication 5,
caractérisé en ce,
que l'unité d'indication (3) a un panneau d'indication (3'), dont les dimensions et le contour correspondent, au moins pour l'essentiel, aux dimensions et au contour de l'ouverture (5) prévue dans l'élément de recouvrement de TAE (22), et que, de façon préférée, le panneau d'indication (3') remplit à fleur l'ouverture (5).

7. Dispositif de protection électrique selon une des précédentes revendications,
caractérisé en ce,
que la plaque centrale (6) est un élément de recouvrement plein (12), ou un élément de recouvrement de téléphone pour un raccordement de téléphone fixe en emplacement, et que, de façon préférée, l'unité fonctionnelle de protection (1) présente une grandeur de type telle, qu'elle est susceptible d'être recouverte avec deux plaques centrales (6), en particulier, une plaque centrale (6) étant un élément de recouvrement de TAE (22) et l'autre étant un élément de recouvrement plein, ou un élément de recouvrement de téléphone pour un raccordement de téléphone fixe en emplacement.

8. Dispositif de protection électrique selon une des précédentes revendications,
caractérisé en ce,
que l'unité fonctionnelle de protection (1) et/ou la plaque de montage (2) présentent au moins un perçage fileté (13, 15),
que la plaque centrale (6), pour le montage, contient un perçage de maintien aligné avec le perçage fileté (13, 15), et
qu'une vis (7, 14) est susceptible d'être vissée, en traversant le perçage de maintien, dans le perçage fileté (13, 15), la tête de vis étant plus grande que le diamètre libre du perçage de maintien dans la plaque centrale (6), de sorte que la plaque centrale (6), lors du vissage à l'intérieur de la vis (7, 14) dans le perçage de vissage (13, 15), est susceptible d'être poussée par la tête de vis contre la plaque de montage (2), et le perçage fileté (13, 15) ayant une longueur de vissage et éventuellement une longueur libre supplémentaire correspondantes, de sorte que la vis (7, 14) est susceptible d'être vissée intérieurement si loin, que la plaque centrale (6) est poussée contre la plaque de montage (2), et
que le perçage de maintien, de façon préférée, contient un évidement conique pour l'accueil de la tête de vis.

9. Dispositif de protection électrique selon une des précédentes revendications,
caractérisé en ce,
qu'une plaque intermédiaire (9), entourant la plaque centrale (6), et/ou une plaque de cadre (10) sont prévues, et
que, de préférence, la plaque de cadre (10) est maintenue, le cas échéant au-dessus de la plaque intermédiaire (9), par la plaque centrale (6), lorsque cette dernière est fixée par rapport à la plaque de montage (2), et/ou
que, de façon préférée, lors de plusieurs plaques centrales (6), un cadre multiple commun est prévu.

10. Dispositif de protection électrique selon une des précédentes revendications,
caractérisé en ce,
que, pour l'incorporation dans des installations électriques ou des systèmes à canalisation de support, et/ou des colonnes d'énergie, et/ou dans des prises femelles d'installation encastrées, en particulier, le cas échéant, des prises femelles doubles d'appareil d'incorporation pour une grande unité fonctionnelle de protection (1), des agencements de fixation appropriés, ou, pour la jonction au-dessus de surfaces, un boîtier avec des agencements de fixation appropriés sont prévus.

11. Emploi d'une plaque centrale d'un élément de recouvrement pour prise femelle pour téléphone (12, 22), lors d'un dispositif de protection électrique (17), selon une des précédentes revendications.
